Europäisches Patentamt

European Patent Office

Office européen des brevets

(19)

(11) EP 0 538 096 B1

(12) # FASCICULE DE BREVET EUROPEEN

(45) Date de publication et mention
de la délivrance du brevet:
**05.06.1996 Bulletin 1996/23**

(51) Int Cl.⁶: **G01S 13/32**

(21) Numéro de dépôt: **92402717.0**

(22) Date de dépôt: **06.10.1992**

(54) **Procédé et dispositif de mesure de courtes distances par analyse du retard de propagation d'une onde**

Verfahren und Vorrichtung zur Messung von kurzen Abständen durch Analyse der Ausbreitungsverzögerung einer Welle

Method and device of measuring short distances by analyzing the propagation delay of a wave

(84) Etats contractants désignés:
**DE FR GB IT**

(30) Priorité: **18.10.1991 FR 9112881**

(43) Date de publication de la demande:
**21.04.1993 Bulletin 1993/16**

(73) Titulaire: **THOMSON-CSF**
**75008 Paris (FR)**

(72) Inventeurs:
 • **Canal, Yves, Thomson-CSF**
 **F-92045 Paris la Defense (FR)**

 • **Barre, Charles, Thomson-CSF**
 **F-92045 Paris la Defense (FR)**

(74) Mandataire: **Benoit, Monique et al**
**THOMSON-CSF**
**SCPI**
**B.P. 329**
**50, rue Jean-Pierre Timbaud**
**92402 Courbevoie Cédex (FR)**

(56) Documents cités:
EP-A- 0 251 387          EP-A- 0 414 567
US-A- 2 453 169          US-A- 4 078 234

# Description

La présente invention concerne un procédé et dispositif de mesure de courtes distances par analyse du retard de propagation d'une onde.

Elle s'applique notamment aux dispositifs anticollisions pour véhicules, aux appareils de mesure de distances utilisées pour l'accostage des navires ou à tout matériel nécessitant de détecter à quelques mètres par exemple la présence d'une cible. Plus généralement, elle s'applique à tout appareil effectuant une mesure de la distance le séparant d'un obstacle dont il se rapproche, le domaine de distances concerné s'étendant de zéro à quelques dizaines de mètres par exemple.

Actuellement, les matériels réalisant une mesure de distance inférieure à quelques dizaines de mètres sont basés soit sur une triangulation optique, soit sur une analyse de la variation de l'amplitude du signal réfléchi sur l'obstacle. Ces procédés sont bien connus de l'homme de l'art. Cependant, la mesure par triangulation optique n'est pas compatible de conditions météorologiques défavorables telles que la pluie ou le brouillard par exemple. Ce procédé est de ce fait fortement pénalisant pour des applications de mesure de courtes distances qui ne peuvent admettre un fonctionnement non garanti. La mesure par analyse de la variation d'amplitude du signal réfléchi par l'obstacle repose sur l'atténuation relative de ce signal à celui émis par l'appareil de mesure. Lorsque l'obstacle s'apparente à un plan de grande dimension par exemple, l'atténuation relative varie comme le carré de la distance à mesurer alors que dans le cas d'un obstacle de nature ponctuelle, l'atténuation varie suivant la puissance 4 de cette distance. Ce procédé, basé sur une émission électromagnétique, peut fonctionner quelque soit l'environnement météorologique. Cependant, il suppose que la réflectivité de l'obstacle ne varie pas lorsque l'appareil de mesure se rapproche de l'obstacle, ce qui est rarement le cas dans les utilisations pratiques. Ainsi, par exemple, la vulnérabilité de ce procédé apparaît dans le cas d'un dispositif anti-collision pour véhicules où la réflectivité de ceux-ci, pour la majorité des ondes, y compris électromagnétiques, varie suivant l'angle sous lequel ils sont vus, angle notamment variable au moment d'un changement de trajectoire. Il existe également des systèmes mesurant le retard de propagation acoustique sur le trajet aller-retour de l'obstacle, mais ces systèmes reposent sur la connaissance de la vitesse du son, et sont donc dépendants de l'altitude de travail et incompatibles des applications spatiales. Enfin, ils sont aisément brouillables soit involontairement par l'environnement, soit volontairement à l'aide d'amplificateurs à retard défini par exemple, et ne sont de ce fait pratiquement pas utilisés. Les méthodes les plus connues pour s'affranchir de la réflectivité de la cible sont la triangulation optique déjà citée, ou la mesure du retard de propagation d'une onde. Pour résister particulièrement aux conditions météorologiques, la mesure du retard d'une onde électromagnétique est aujourd'hui la solution universellement adoptée dans le cas de distances à mesurer supérieures à plusieurs dizaines de mètres. Cette solution permet également de s'affranchir de la vitesse de rapprochement et garantit donc une certaine indépendance entre distance et vitesse. Ces dispositifs électromagnétiques effectuent par ailleurs des mesures précises de distance. Cependant, plus la distance à mesurer devient faible, plus les dispositifs de mesure deviennent complexes et coûteux. En effet, ces matériels utilisent tous un paramètre nommé résolution en distance. Ce paramètre détermine un découpage de la distance en cases adjacentes. Une mesure précise de la distance consiste alors à comparer le niveau d'énergie du signal reçu de la cible sur deux cases adjacentes pour déterminer, par pondération des distances aux centres de ces deux cases, la distance réelle à la cible. Pour des mesures de courtes distances, cette méthode nécessiterait d'augmenter considérablement la bande de fréquence du signal émis.

Par exemple, pour mesurer une distance de 1,5 mètre, la résolution en distance doit être typiquement de 1 mètre et en aucun cas de plus de 1,5 mètre. L'onde électromagnétique doit alors présenter une largeur de spectre égale à 150 MHz ou une durée d'impulsion de 6,6 nanosecondes, ce qui complique la mise en oeuvre des dispositifs de mesure qui deviennent coûteux et peu fiables.

Le but de l'invention est de pallier les inconvénients précités par le fait qu'elle permet de mesurer une distance inférieure à la résolution en distance.

A cet effet, l'invention a pour objet un procédé de mesure de courtes distances par analyse du retard de propagation d'une onde, l'onde étant modulée en fréquence avec une période de modulation (T) et émise vers une cible par un moyen de mesure, la distance entre le moyen de mesure et la cible étant segmentée en cases distance adjacentes dont la première commence à l'endroit du moyen de mesure, à la distance nulle, chaque case distance ayant un niveau d'énergie associé obtenu par la démodulation du signal de mesure du retard résultant du produit de corrélation entre le signal émis et le signal reçu par le moyen de mesure, le signal reçu étant la réflexion du signal émis sur la cible, caractérisé en ce qu'il consiste à créer deux repliements distincts du spectre du signal résultant du produit de corrélation entre le signal émis et le signal reçu et dont le niveau d'énergie correspond à la première case distance, ces repliements étant effectués sur la partie du spectre correspondant à des distances négatives, le pli correspondant à la distance nulle, ces deux repliements distincts permettant d'obtenir deux niveaux d'énergie distincts sur la totalité de la première case distance, et à mesurer toutes les distances sur cette première case distance par comparaisons et analyses des deux niveaux d'énergie.

L'invention a également pour objet un dispositif pour la mise en oeuvre du procédé précité.

L'invention a pour principal avantage qu'elle permet des mesures de courtes distances, indépendamment des conditions d'environnement ou de réflectivité des cibles, de façon fiable et peu coûteuse.

D'autres caractéristiques et avantages de l'invention apparaîtront à l'aide de la description qui suit faite en regard des dessins annexés qui représentent :

la figure 1a, une modulation de fréquence du signal émis par le moyen de mesure,
la figure 1b, les fréquences en fonction du temps, de signaux émis et reçus par le moyen de mesure,
la figure 1c, le signal de mesure du retard résultant du produit de corrélation entre le signal émis et le signal reçu présentés en figure 1b,
la figure 1d, le spectre de raies du signal de la figure 1c,
la figure 2a, un axe segmenté en cases distance,
la figure 2b, des niveaux d'énergie liés aux cases distance,
la figure 3a, une courbe de niveau d'énergie résultant d'un repliement soustractif du spectre du signal de mesure du retard,
la figure 3b, une courbe de niveau d'énergie résultant d'un repliement additif du spectre du signal de mesure du retard,
la figure 3c, deux courbes de niveau d'énergie liées à la première case distance et permettant de réaliser des mesures de courtes distances,
les figures 4a et 4b, deux fonctions de démodulation du signal de mesure du retard,
la figure 5, le croisement de deux courbes de niveau d'énergie liées à la première case distance,
la figure 6, un mode de réalisation possible d'un dispositif pour la mise en oeuvre du procédé selon l'invention.

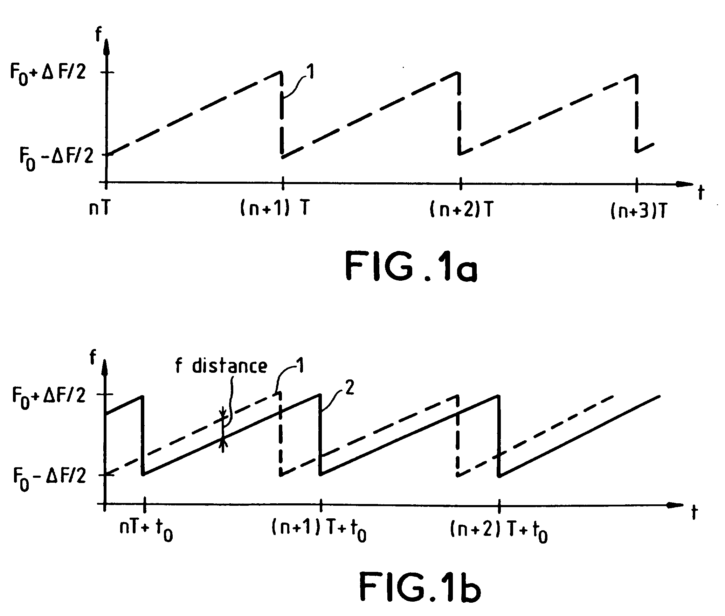

La figure 1a représente la modulation de fréquence du signal émis 1 par le moyen de mesure de distance, en fonction du temps. Ce signal est modulé à la fréquence $1/_T$. Selon l'invention, cette modulation de fréquence peut être quelconque, néanmoins pour des facilités de représentation, le signal de la figure 1a est modulé linéairement en fonction du temps. Sur la figure 1a, la fréquence du signal émis varie entre la fréquence F0 $- \Delta F/_2$ et la fréquence F0 $+ \Delta F/_2$ ; sur la figure, plusieurs périodes de modulation sont représentées entre les instants nT, (n + 1)T, (n + 2)T et (n + 3)T, T représentant la période de modulation.

La figure 1b représente toujours la fréquence du signal émis 1 en fonction du temps mais aussi la fréquence du signal reçu 2 par le moyen de mesure en fonction du temps, ce signal reçu est issu de la réflexion du signal émis sur la cible dont il faut mesurer la distance. La fréquence du signal reçu 2 varie toujours entre F0 $- \Delta F/_2$ et F0 $+ \Delta F/_2$ mais la modulation est retardée d'un temps t0 par rapport à la modulation du signal émis 1, et t0 = $2D/_C$ (1) où D est la distance à mesurer, entre la cible et le moyen de mesure, et c est la vitesse de la lumière. Sur la figure 1b, entre les temps nT + t0 et (n + 1)T, la différence de fréquence entre les signaux émis et reçus est constante ; cette différence est notée f distance ; elle dépend de la distance à la cible. Conformément aux notations précédentes établies,

$$f \text{ distance} = \Delta F \times \frac{t0}{T} \text{ et d'après la relation} \quad (1)$$

$$f \text{ distance} = \frac{\Delta F}{T} \times \frac{2D}{C} \quad (2)$$

ainsi connaissant $\Delta F$, T et c, et ayant mesuré f distance, il est possible de déterminer la distance D, néanmoins cette relation ne permet pas des mesures précises car il n'est pas possible de mesurer finement des variations de la fréquence f distance qui correspondent à des variations de courtes distances par exemple, de l'ordre de quelques mètres par exemple, à moins d'utiliser des dispositifs très coûteux et peu fiables. Pour des mesures précises, il est préférable d'utiliser une méthode d'analyse des signaux exposés par la suite.

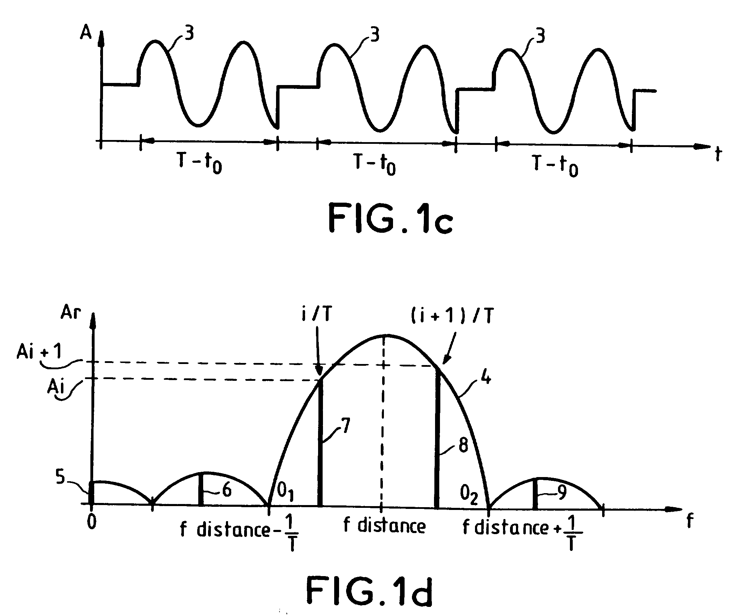

La figure 1c présente l'amplitude A en fonction du temps, du produit de corrélation entre le signal reçu et le signal émis pour une distance donnée. Ce signal 3 résultant dépend du retard et est donc appelé signal de mesure du retard, il est constitué d'une succession de portions de sinusoïdes tronquées de durée T - t0 et de fréquence f distance. Chaque portion de sinusoïde correspond à une période de modulation du signal émis au retard t0 près.

La figure 1d présente le spectre de raies du signal 3 de la figure 1c. En effet, chaque portion de sinusoïde du signal 3 possède un spectre dont les raies varient suivant la fonction $\frac{\sin x}{x}$, ce spectre étant centré sur la fréquence f distance. La largeur entre les zéros 01, 02 d'abscisses respectifs f distance $\frac{1}{T}$ et f distance $+\frac{1}{T}$ du lobe principal est égale à 2/T, T étant toujours la période de modulation précédemment définie. Le terme de retard t0 n'est pas pris en compte car il est négligeable en valeur devant T, typiquement de l'ordre de 0,1 % par exemple, ce terme t0 n'intervient donc pas dans la largeur des lobes.

La position de l'enveloppe 4 du spectre dans le domaine fréquentiel dépend de la valeur de la fréquence f distance donc de la distance ; elle est parcourue par les raies 5, 6, 7, 8 et 9 produites par la modulation du signal émis 1 à la fréquence 1/T. Ces raies, contrairement à l'enveloppe 4, restent fixes quand la fréquence f distance varie et sont positionnées à des fréquences égales à un nombre entier i de fois la fréquence de modulation 1/T, i étant un nombre entier positif, les raies successives 7 et 8 sont par exemple situées respectivement aux fréquences $i/_T$ et $^{(i+1)}/_T$ avec des amplitudes Ai et Ai + 1 comme l'indique la figure 1d. Le signal de mesure du retard 3 de la figure 1c démodulé par des fréquences multiples de 1/T produit des tensions continues liées à la distance. Ces tensions sont représentatives d'un niveau d'énergie reçu par le moyen de mesure. L'excursion de fréquence du signal émis $\Delta F$ ou son

dual temporel $\frac{1}{2\Delta F}$ définit en fait la résolution en distance de la mesure. En effet, la résolution fréquentielle est la fréquence pour laquelle f distance $= \frac{1}{T}$, or d'après la relation (2), cela implique que

$$\frac{1}{T} = \frac{\Delta F}{T} 2 \frac{DR}{c} \qquad (3)$$

où DR est la résolution en distance, d'après (3), il vient :

$$DR = \frac{c}{2\Delta F} \; .$$

Ainsi, le moyen de mesure envoyant des trains d'onde continus modulés suivant 1/2ΔF vers la cible, il n'est pas possible à priori de définir la distance, au mieux à c/2ΔF près, où c est la vitesse de la lumière. La distance peut donc être segmentée en segments consécutifs ayant chacun la largeur R = c/2ΔF, ces segments sont appelés des cases distance.

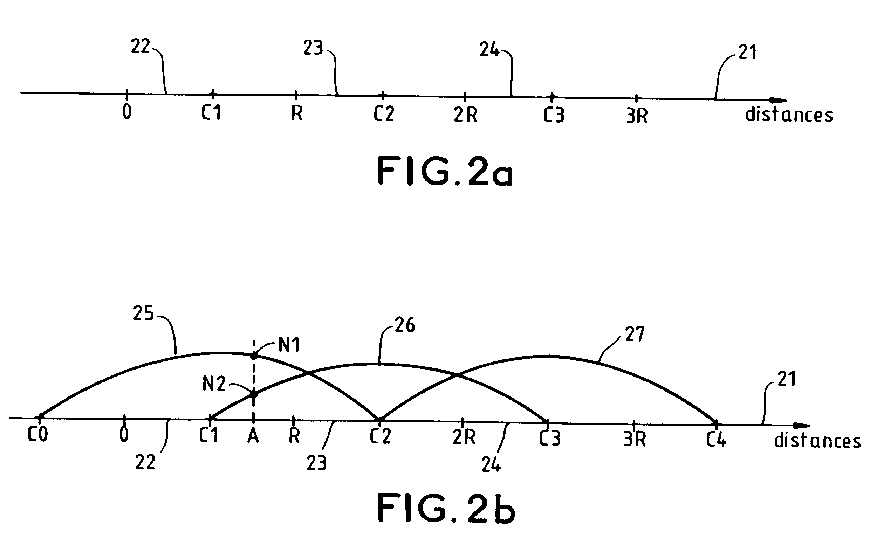

La figure 2a présente un axe de mesure de distances 21 comprenant 3 cases distance adjacentes 22, 23 et 24 de longueur R à partir du point origine 0 correspondant à la distance nulle, la case 22 étant comprise entre les points 0 et R, la case 23 entre R et 2R et la case 24 entre 2R et 3R. Elles possèdent respectivement les centres C1, C2 et C3. Sans méthode précise de mesure, toute distance comprise entre les points 0 et 3R n'appartient qu'à l'une des trois mesures correspondant à la position de ces points centraux C1, C2, C3 des cases distance 22, 23, 24.

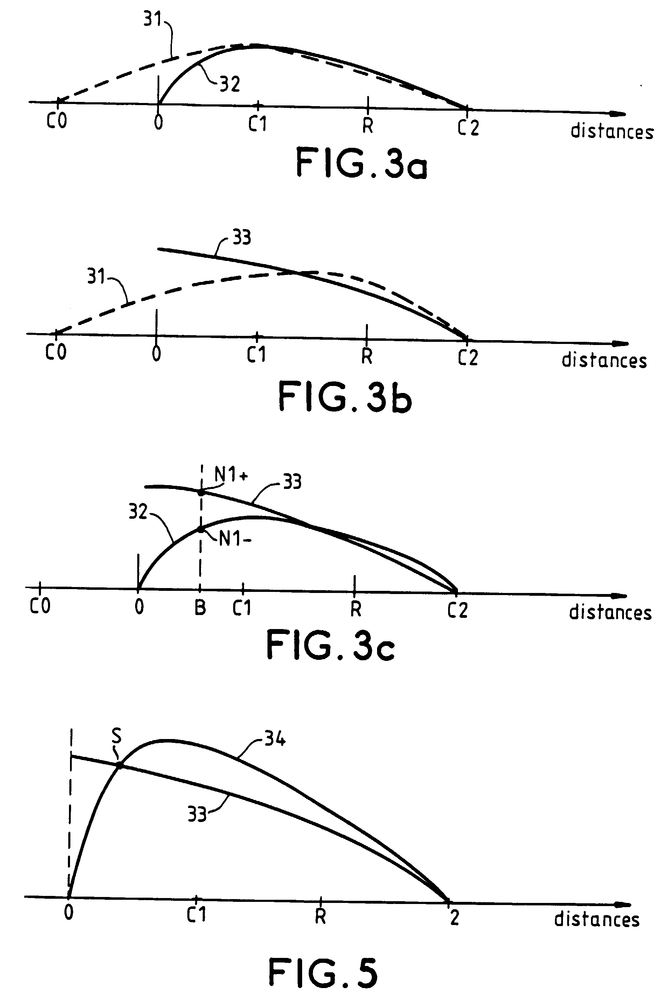

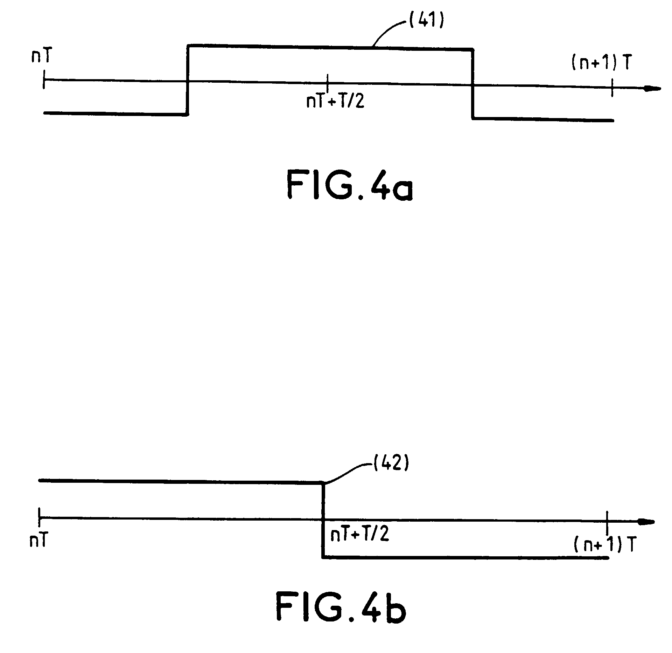

La figure 2b présente les niveaux d'énergie reçus par le moyen de mesure, liés à ces cases distance et obtenus comme précédemment décrit, par démodulation du signal 3. Les courbes 25, 26 et 27 correspondent respectivement aux niveaux d'énergie correspondant respectivement aux cases distance 22, 23, 24. Chaque courbe d'énergie est centrée sur le point central de sa case distance correspondante et a une largeur égale à 2R, correspondant à la largeur 1/ΔF du lobe principal de l'enveloppe spectrale de la figure 1d. L'influence des lobes secondaires est négligée car ceux-ci interviennent très peu. Ainsi, l'énergie liée à la première case distance 22 est comprise entre le point C0 d'abscisse - R/2 et le point C2 précédemment défini, l'énergie liée à la deuxième case distance 23 entre les points C1 et C3, et l'énergie liée à la troisième case distance 24 entre le point C2 et C4 d'abscisse 7R/2. Il est alors possible d'exploiter ces niveaux d'énergie pour mesurer précisément les distances, c'est-à-dire avec une précision inférieure à la distance de résolution des cases distance. Par exemple, pour mesurer précisément une distance à une cible située au point A situé entre C1 et R, il suffit de comparer les niveaux d'énergie N1 et N2 des deux cases distance adjacentes 22 et 23 en ce point, puisque l'on connaît à priori la forme des courbes 25 et 26, et de comparer les niveaux d'énergie des points centraux C1, C2, C3. C1 ayant le plus fort niveau d'énergie indiquera que le point A est dans la première case distance. L'inconvénient majeur de cette méthode connue est qu'elle ne permet pas de réaliser des mesures entre les points 0 et C1, c'est-à-dire des mesures comprises entre 0 et R/2, donc de mesurer des courtes distances, puisqu'entre 0 et R/2 il n'existe qu'une seule courbe de niveau d'énergie. Toute méthode de discrimination comme celle exposée ci-dessus est alors impossible à mettre en oeuvre. Afin d'effectuer des mesures entre 0 et R/2, le procédé selon l'invention exploite la particularité de la première case distance 22. En effet, l'énergie de cette case s'étend aux distances négatives, entre 0 et C0 d'abscisse - R/2. De telles distances n'existent pas en réalité et la partie du spectre correspondante se trouve en fait repliée naturellement de manière à se superposer à la partie du spectre correspondant à la partie positive de cette première case. Cependant, ce repliement n'est pas maîtrisé et il est réalisé suivant une phase quelconque. Le procédé selon l'invention crée deux repliements distincts et définis au voisinage de l'origine, afin d'étendre la méthode de mesure définie précédemment aux distances comprises entre 0 et R/2. Ces deux repliements sont des repliements de la partie du spectre correspondant aux distances négatives, le pli du spectre correspond lui à la distance nulle illustrée par le point 0 de la figure 2b. Par exemple, un repliement soustractif du spectre peut être réalisé comme le montre le résultat obtenu sur la première case distance illustré par la figure 3a. La courbe en pointillé 31 représente l'énergie théorique comme indiqué sur la figure 2b, la courbe 32 représente l'énergie obtenue suite au repliement soustractif du spectre correspondant. Ce repliement peut être obtenu par une démodulation du signal 3 de mesure du retard en multipliant ce signal 3 par une fonction périodique de fréquence 1/T telle que cette fonction de démodulation présente une phase de 90 ° ou 270 ° au milieu de la période de modulation T comme le signal 41 de la figure 4a par exemple. Un repliement additif peut être réalisé comme le montre la figure 3b. La courbe théorique 31 y est toujours représentée; la courbe 33 représente l'énergie obtenue suite au repliement additif du spectre. Ce repliement peut être obtenu par une démodulation du signal 3 en le multipliant par une fonction périodique à la fréquence 1/T et déphasée de 90 ° ou 270° par rapport à la précédente comme le signal 42 de la figure 4b par exemple, c'est à dire que cette fonction de démodulation présente une phase de 0° ou 180° au milieu de la période de démodulation T. Comme le montre la figure 3c, deux courbes de niveaux d'énergie sont alors disponibles sur toute la première case distance et permettent des mesures entre l'origine et le point C1 de distance R/2. Ces mesures sont par ailleurs précises grâce à la différence marquée des deux courbes 32 et 33 sur cette portion. Ainsi, pour obtenir la distance du point B, il suffit de comparer les niveaux d'énergie N1+ et N1-.

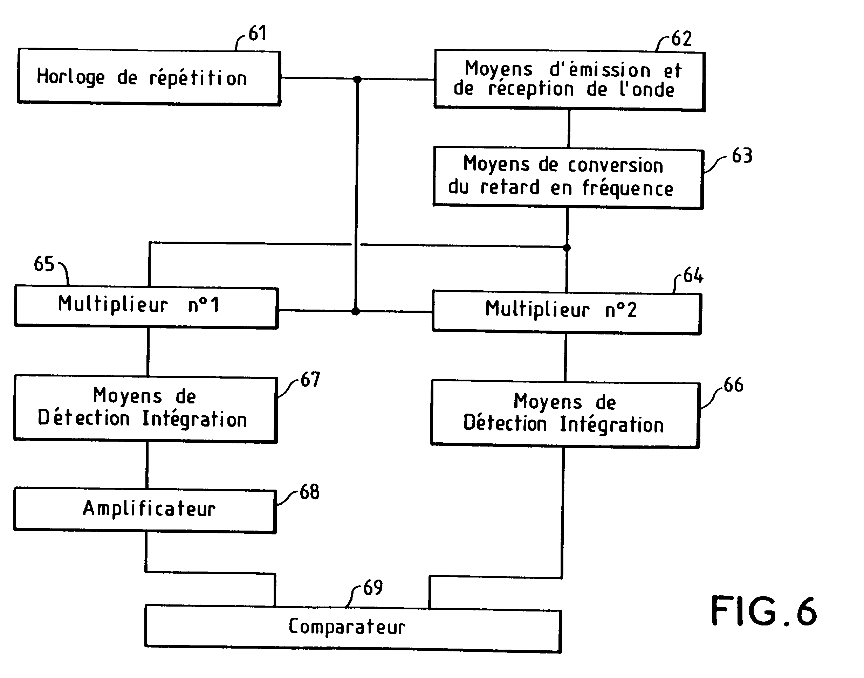

Un intérêt supplémentaire de l'invention réside dans le fait que les réponses des démodulations précédentes étant des courbes 32, 33 continues, en modifiant le gain relatif de l'une des voies de démodulation, il est possible de provoquer un croisement des deux courbes comme le montre la figure 5 où la courbe 32 obtenue par repliement soustractif a été amplifiée pour donner la courbe 34. Celle-ci a un point d'intersection S avec la courbe 33. A partir de ce résultat, il est possible de réaliser une variante du procédé selon l'invention. En effet, une comparaison en tout ou rien des deux niveaux d'énergie dont l'un au moins est amplifié d'une valeur prédéterminée, permet de savoir si la distance est supérieure ou inférieure à une distance donnée qui est en fait la distance correspondant au point d'intersection S des deux courbes. Cette distance donnée pouvant être faible, voire presque nulle. Un mode de réalisation possible d'un dispositif pour la mise en oeuvre du procédé selon l'invention est présenté sur la figure 6.

Le dispositif décrit par le synoptique de la figure 6 comprend une horloge de répétition 61 fonctionnant à la fréquence 1/T couplée à des moyens 62 d'émission et de réception de l'onde, à un multiplieur n°1 65 et à un multiplieur n°2 64. Le multiplieur n°1 65 peut par exemple délivrer le signal 41 de la figure 4a et le multiplieur n°2 64, le signal 42 de la figure 4b. Ces multiplieurs peuvent être réalisés simplement à partir de parties logiques par exemple. Les moyens 62 sont couplés à des moyens 63 de conversion du retard en fréquence. La fonction de sortie de ces moyens, par exemple la fonction 3 de la courbe 1 c, est démodulée par les signaux des multiplieurs 64 et 65. Des moyens de détection et d'intégration 66, 67 reliés aux sorties des multiplieurs 64, 65 permettent d'obtenir les niveaux d'énergie liés aux cases distances et particulièrement à la première case distance. Par exemple, les moyens 64 délivrent le niveau 33 de la figure 3c et les moyens 65 délivrent le niveau 32 de la figure 3c. Un amplificateur 68 est couplé à la sortie des moyens de détection et d'intégration 67. Cet amplificateur 68 amplifie par exemple le niveau 32 afin d'obtenir à sa sortie le niveau 34 de la figure 5 par exemple. Les sorties de l'amplificateur 68 et des moyens de détection et d'intégration 66 sont reliées à l'entrée d'un comparateur 69. Celui-ci permet de comparer par exemple les niveaux d'énergie 32 et 34, et suivant un signal de sortie, il est ainsi possible de déterminer si la distance est supérieure à une distance de référence. Le gain de l'amplificateur 68 peut être réglé en fonction de la distance de référence désirée provoquant le basculement du comparateur 69.

Le procédé selon l'invention s'applique quelque soit le type d'onde émise par le moyen de mesure, celle-ci peut être électromagnétique, optique, acoustique ou autre.

## Revendications

1. Procédé de mesure de courtes distances par analyse du retard de propagation d'une onde, l'onde étant modulée en fréquence (1) avec une période de modulation (T) et émise vers une cible par un moyen de mesure, la distance entre le moyen de mesure et la cible étant segmentée en cases distance adjacentes (22, 23, 24) dont la première (22) commence à l'endroit du moyen de mesure (0), à la distance nulle, chaque case distance ayant un niveau d'énergie associé (25, 26, 27) obtenu par la démodulation du signal (3) de mesure du retard résultant du produit de corrélation entre le signal émis (1) et le signal reçu (2) par le moyen de mesure, le signal reçu (2) étant la réflexion du signal émis (1) sur la cible, caractérisé en ce qu'il consiste à créer deux repliements distincts du spectre (4) du signal (3) résultant du produit de corrélation entre le signal émis (1) et le signal reçu (2) et dont le niveau d'énergie correspond à la première case distance (22), ces repliements étant effectués sur la partie du spectre correspondant à des distances négatives, le pli correspondant à la distance nulle, ces deux repliements distincts permettant d'obtenir deux niveaux d'énergie distincts (32, 33) sur la totalité de la première case distance (22), et à mesurer toutes les distances sur cette première case distance par comparaisons et analyses des deux niveaux d'énergie (32, 33)

2. Procédé selon la revendication 1 caractérisé en ce qu'il réalise un repliement soustractif (32) du spectre (4) par une démodulation du signal (3) de mesure du retard en multipliant ce signal (3) par une fonction périodique de fréquence égale à la fréquence de modulation du signal émis (1) telle que cette fonction périodique (41) présente une phase de 90° ou 270° au milieu de la période de modulation (T) du signal émis.

3. Procédé selon la revendication 1 caractérisé en ce qu'il réalise un repliement additif (33) du spectre (4) par une démodulation du signal (3) de mesure du retard en multipliant ce signal (3) par une fonction périodique (42) de fréquence égale à la fréquence de modulation du signal émis (1) telle que cette fonction périodique présente une phase de 0° ou 180° au milieu de la période de modulation (T) du signal émis.

4. Procédé selon la revendication 1 caractérisé en ce qu'il réalise une amplification d'un des niveaux d'énergie (32, 33) de la première case distance (22) pour provoquer un croisement des deux courbes (S) permettant par comparaison des deux niveaux d'énergie résultant (33, 34) de définir la distance par rapport à la distance correspondant au point d'intersection (S).

5. Dispositif pour la mise en oeuvre du procédé selon l'une quelconque des revendications précédentes qui comprend une horloge de répétition (61) de période (T), des moyens d'émission et de réception d'onde (62) d'une onde modulée en fréquence avec une période de modulation (T) couplés à l'horloge, des moyens de conversion du retard en fréquence (63) de l'onde reçue par rapport à l'onde émise, ces moyens étant couplés aux moyens d'émission et de réception de l'onde (62) caractérisé en ce qu'il comprend des multiplieurs (64,65) recevant de la dite horloge les signaux adaptés pour produire les repliements dudit spectre et recevant des moyens d'émission et de réception ledit signal résultant, les sorties des multiplieurs (64, 65) étant reliées aux entrées de moyens de détection et d'intégration (67, 66) dont l'un (67) est couplé à un amplificateur (68), les sorties de l'amplificateur (68) et des moyens de détection et d'intégration (66) étant reliées aux entrées d'un comparateur (69).

**6.** Dispositif selon la revendication 5 caractérisé en ce que le gain de l'amplificateur (68) est réglable.


**Patentansprüche**

**1.** Verfahren zur Messung kurzer Entfernungen durch Analyse der Laufzeit einer Welle, die mit einer Modulationsperiode (T) in ihrer Frequenz moduliert ist (1) und in Richtung auf einen Zielpunkt von einem Meßmittel ausgesendet wird, wobei die Entfernung zwischen dem Meßmittel und dem Zielpunkt in aufeinanderfolgende Entfernungsbereiche (22, 23, 24) unterteilt ist, von denen der erste (22) am Meßmittel (0) mit der Entfernung Null beginnt und jedem Entfernungsbereich ein Energiepegel (25, 26, 27) zugeordnet ist, der bei der Demodulation des Laufzeitmeßsignals (3) erhalten wird, das aus dem Korrelationsprodukt zwischen dem Sendesignal (1) und dem Empfangssignal (2) in den Meßmitteln resultiert, wobei das Empfangssignal (2) die Reflexion des am Zielpunkt reflektierten Sendesignals (1) ist, dadurch gekennzeichnet, daß zwei getrennte Faltungen des Spektrums (4) des Signals (3) durchgeführt werden, das aus der Korrelation zwischen dem Sende- und dem Empfangssignal (1, 2) resultiert und dessen Energiepegel dem ersten Entfernungsbereich (22) entspricht, wobei diese Faltungen im negativen Entfernungen entsprechenden Teil des Spektrums erfolgen und der Falz der Entfernung Null entspricht, wobei diese beiden getrennten Faltungen zwei unterschiedliche Energiepegel (32, 33) über den gesamten ersten Entfernungsbereich (22) hinweg ergeben und alle Entfernungen in diesem ersten Entfernungsbereich durch Vergleich und Analyse der beiden Energiepegel (32, 33) gemessen werden.

**2.** Verfahren nach Anspruch 1, dadurch gekennzeichnet, daß es eine subtraktive Faltung (32) des Spektrums (4) durch eine Demodulation des Laufzeitmeßsignals (3) mittels Multiplizierung dieses Signals (3) mit einer periodischen Funktion einer Frequenz gleich der Modulationsfrequenz des Sendesignals (1) bewirkt, wobei diese periodische Funktion (41) eine Phase von 90° oder 270° in der Mitte der Modulationsperiode (T) des Sendesignals besitzt.

**3.** Verfahren nach Anspruch 1, dadurch gekennzeichnet, daß es eine additive Faltung (33) des Spektrums (4) durch eine Demodulation des Laufzeitmeßsignals (3) mittels Multiplizierung dieses Signals (3) mit einer periodischen Funktion (42) einer Frequenz gleich der Modulationsfrequenz des Sendesignals (1) bewirkt, wobei diese periodische Funktion eine Phase von 0 oder 180° in der Mitte der Modulationsperiode (T) des Sendesignals besitzt.

**4.** Verfahren nach Anspruch 1, dadurch gekennzeichnet, daß es eine Verstärkung eines der Energiepegel (32, 33) des ersten Entfernungsbereichs (22) durchführt, um einen Schnittpunkt (S) der beiden Kurven zu erhalten, so daß durch Vergleich der beiden resultierenden Energiepegel (33, 34) die Entfernung im Vergleich mit der dem Schnittpunkt (S) entsprechenden Entfernung definiert werden kann.

**5.** Vorrichtung zur Durchführung des Verfahrens nach einem beliebigen der vorhergehenden Ansprüche, mit einem Wiederholtaktgeber (61) einer Periode (T), mit Sende- und Empfangsmitteln (62) für eine mit einer Modulationsperiode (T) in der Frequenz modulierte Welle, die mit dem Taktgeber gekoppelt sind, mit Mitteln zur Umwandlung der Verzögerung der empfangenen Welle im Vergleich zur gesendeten Welle in eine Frequenz (63), die an die Sende- und Empfangsmittel (62) gekoppelt sind, dadurch gekennzeichnet, daß sie Multiplizierer (64, 65) aufweist, die von dem Taktgeber die geeigneten Signale empfangen, um die Faltungen des Spektrums zu erzeugen, und die von den Sende- und Empfangsmitteln das resultierende Frequenzsignal empfangen, wobei die Ausgänge der Multiplizierer (64, 65) an die Eingänge von Detektor- und Integrationsmitteln (67, 66) angeschlossen sind, von denen eines (67) mit einem Verstärker (68) gekoppelt ist, dessen Ausgänge ebenso wie die der Detektor- und Integrationsmittel (66) an die Eingänge eines Komparators (69) angeschlossen sind.

**6.** Vorrichtung nach Anspruch 5, dadurch gekennzeichnet, daß der Verstärkungsgrad des Verstärkers (68) einstellbar ist.


**Claims**

**1.** Method of measuring short distances by analysing the propagation delay of a wave, the wave being frequency-modulated (1) with a modulation period (T) and emitted towards a target by a measuring means, the distance between the measuring means and the target being segmented into adjacent distance compartments (22, 23, 24), the first (22) of which starts at the location of the measuring means (0), at the zero distance, each distance compartment having an associated energy level (25, 26, 27) obtained by demodulating the delay measurement signal (3) resulting from the product of correlation between the emitted signal (1) and the signal (2) received by the measuring means, the received signal (2) being the reflection of the emitted signal (1) off the target, characterized in that it consists in creating two distinct aliasings of the spectrum (4) of the signal (3) resulting from the product of correlation between the emitted signal (1) and the received signal (2) and whose energy level corresponds to the first distance compartment (22), these aliasings being performed on the part of the spectrum corresponding to negative distances, the break-point corresponding to the zero distance, these two distinct aliasings making it possible to obtain two distinct energy levels (32, 33) over the whole of the first distance compartment (22), and in measuring all the distances over this first distance compartment through comparisons and analyses of the two energy levels (32, 33).

2. Method according to Claim 1, characterized in that it carries out a subtractive aliasing (32) of the spectrum (4) by demodulation of the delay measurement signal (3) by multiplying this signal (3) by a periodic function with frequency equal to the frequency of modulation of the emitted signal (1) such that this periodic function (41) exhibits a phase of 90° or 270° in the middle of the period of modulation (T) of the emitted signal.

3. Method according to Claim 1, characterized in that it carries out an additive aliasing (33) of the spectrum (4) by demodulation of the delay measurement signal (3) by multiplying this signal (3) by a periodic function (42) with frequency equal to the frequency of modulation of the emitted signal (1) such that this periodic function exhibits a phase of 0° or 180° in the middle of the period of modulation (T) of the emitted signal.

4. Method according to Claim 1, characterized in that it carries out an amplification of one of the energy levels (32, 33) of the first distance compartment (22) so as to cause the two curves (S) to cross over and making it possible by comparing the two resulting energy levels (33, 34) to define the distance with respect to the distance corresponding to the point of intersection (S).

5. Device for the implementation of the method according to any one of the preceding claims, which comprises a repetition clock (61) of period (T), wave emission and reception means (62) for a wave frequency-modulated with a modulation period (T), the means being coupled with the clock, means of conversion of the frequency delay (63) of the received wave with respect to the emitted wave, these means being coupled with the wave emission and reception means (62), characterized in that it comprises multipliers (64, 65) which receive from the said clock the signals suitable for producing the aliasings of the said spectrum and which receive the said resultant signal from the emission and reception means, the outputs of the multipliers (64, 65) being connected to the inputs of detection and integration means (67, 66), one (67) of which is coupled to an amplifier (68), the outputs of the amplifier (68) and of the detection and integration means (66) being connected to the inputs of a comparator (69).

6. Device according to Claim 5, characterized in that the gain of the amplifier (68) is adjustable.

## FIG.1a

## FIG.1b

EP 0 538 096 B1

**FIG.1c**

**FIG.1d**

FIG.2a

FIG.2b

FIG.3a

FIG.3b

FIG.3c

FIG.5

nT              (41)

nT+T/2        (n+1) T

# FIG.4a

nT           (42)

nT+T/2        (n+1) T

# FIG.4b

**FIG.6**

- 61 — Horloge de répétition
- 62 — Moyens d'émission et de réception de l'onde
- 63 — Moyens de conversion du retard en fréquence
- 64 — Multiplieur n°2
- 65 — Multiplieur n°1
- 66 — Moyens de Détection Intégration
- 67 — Moyens de Détection Intégration
- 68 — Amplificateur
- 69 — Comparateur